# EUROPÄISCHE PATENTANMELDUNG

(11) **EP 1 336 513 A1**
(43) Veröffentlichungstag der Anmeldung: **20.08.2003**
(21) Anmeldenummer: 03001837.8
(22) Anmeldetag: 29.01.2003
(51) Int. Cl.: B60C 23/06

(54) **Verfahren und Vorrichtung zur Reifendrucküberwachung in einem Kraftfahrzeug**

(30) Priorität: 13.02.2002 DE 10205815
(71) Anmelder: ROBERT BOSCH GMBH, 70442 Stuttgart (DE)
(72) Erfinder: Arndt, Dietmar A., 74343 Kleinsachsenheim (DE)

(57) **Zusammenfassung**

Die Erfindung schafft ein Verfahren und eine entsprechende Vorrichtung zur Reifendrucküberwachung in einem Kraftfahrzeug. Erfindungsgemäß erfolgen ein Messen einer Ortsveränderung und/oder Ortsveränderungsgeschwindigkeit des Kraftfahrzeuges mittels einer GPS-Vorrichtung (G); ein Erfassen mindestens eines Parameters (Nₜ, v(t)), welcher die Ortsveränderung und/oder Ortsveränderungsgeschwindigkeit des Kraftfahrzeuges beschreibt, mittels einer im Kraftfahrzeug vorgesehen Erfassungseinrichtung (E); und ein Berechnen eines den Reifendruck beschreibenden Parameters unter Verwendung des erfassten Parameters (Nₜ, v(t)) und der gemessenen Ortsveränderung und/oder Ortsveränderungsgeschwindigkeit mittels eines vorgegebenen Reifendruckmodells.

## Beschreibung

### STAND DER TECHNIK

Die vorliegende Erfindung betrifft ein Verfahren und eine Vorrichtung zur Reifendrucküberwachung in einem Kraftfahrzeug.

Der Reifen nimmt als Bindeglied zwischen Kraftfahrzeug und Fahrbahn eine außerordentlich wichtige Rolle ein. Er überträgt alle Kräfte und Momente, wobei sein Übertragungsverhalten deutlich in Fahrverhalten, Komfort und Sicherheit des Kraftfahrzeuges eingeht. Bei pneumatischen Reifen ist der Reifendruck, das heißt der Überdruck des eingeschlossenen Gases oder Gasgemisches, ein wesentlicher Parameter, der das Übertragungsverhalten und den Verschleiß des Reifens bestimmt. Daher ist es wichtig, den Reifendruck stets in einem engen Optimalbereich bzw. Sollbereich zu halten.

Im Stand der Technik üblich sind verschiedene Methoden, den Reifendruck zu messen.

Eine Methode ist die direkte Messung mit einem Drucksensor und ist aufwendig, da sie einen separaten Sensor und eine entsprechende Übertragungseinheit benötigt. Eine weitere Methode besteht im Ausmessen der Kontaktfläche mit einem Reifenlatschsensor. Diese Methode beruht darauf, dass sich mit abnehmenden Reifendruck die Lauffläche des Reifens vergrößert.

Eine weitere Methode besteht in der Messung des Übertragungsverhaltens des Reifens z. B. der Seitenführungskraft, welche mit abnehmenden Reifendruck ebenfalls abnimmt.

Auch kann man über das Messen des dynamischen Reifenradius Informationen über den Reifeninnendruck bzw. über die Einfederung des Reifens erhalten.

Einen Überblick über die Aktivitäten auf dem Gebiet der Reifendruckmessung liefert unter anderem die Veröffentlichung Helmut Meyer, Karlsruhe, "Reifendrucküberwachung anhand von Raddrehzahlsignalen", Reihe 12, Nr. 274, VDI-Verlag.

In dieser Arbeit wird unter anderem die Veränderung der Raddrehzahl bei konstanter Fahrzeuggeschwindigkeit in Abhängigkeit des Luftdrucks aufgezeigt. Eine große Schwäche eines darauf basierenden Tire Pressure Monitoring(TPM)-Systems besteht darin, dass immer nur aufgrund von Drehzahlunterschieden der Räder auf einen Druckverlust geschlossen werden kann. Bei gerader Fahrstrecke und bei annähernd gleichem Druck der Räder aber zu niedrigem Druck, kann ein solches System keinen Unterdruck erkennen.

### VORTEILE DER ERFINDUNG

Die der vorliegenden Erfindung zu Grunde liegende Idee besteht darin, daß eine Berechnung eines den Reifendruck beschreibenden Parameters unter Verwendung eines mittels eines GPS-Systems erfassten Parameters, welcher die Ortsveränderung und/oder Ortsveränderungsgeschwindigkeit des Kraftfahrzeuges beschreibt und einer gemessenen Ortsveränderung mittels eines vorgegebenen Reifendruckmodells durchgeführt wird.

Mittels des Gegenstandes der vorliegenden Erfindung können also die Raddrehzahlen mit der zurückgelegten Wegstrecke bzw. die Kraftfahrzeuggeschwindigkeit mit der durch das GPS-System gemessenen Geschwindigkeit in Verbindung gebracht werden. Somit kann auf den dynamischen Radradius geschlossen werden und damit auf den Reifendruck.

Das erfindungsgemäße Verfahren mit den Merkmalen des Anspruches 1 bzw. die Vorrichtung nach Anspruch 8 weisen den besonderen Vorteil auf, daß keine separate Drucksensorik erfoderlich ist, sondern auf ohnehin vorhandene Erfassungsund Berechnungseinrichtungen zurückgegriffen werden kann.

Bei solchen raddrehzahlbasierten TPM-Systemen tritt die also Schwierigkeit auf, den absoluten Reifendruck zu bestimmen, da die wahre Fahrzeuggeschwindigkeit über Grund nicht bekannt ist. Wird mittels des GPS-Systems die absolute Fahrstrecke bestimmt, kann diese Strecke mit den aus dem Raddrehzahlen bestimmten Wert verglichen werden. Andererseits kann auch die absolute Geschwindigkeit bestimmt werden und diese mit der aus den Raddrehzahlen oder aus dem Tachometer bestimmten Geschwindigkeit bestimmt werden. Die Genauigkeit bei der Bestimmung der wahren Fahrtstrecke kann durch Vergleich mit im Navigationssystem abgespeicherten Karten noch gesteigert werden. Ebenso können die Veränderungen der Raddrehzahlen, z. B. durch Kurvenfahrten und starke Beschleunigungen, modellhaft in das Reifendruckmodell aufgenommen werden. Auch können Auswirkungen von Schlupfansteigungen oder bei Beschleunigungen berücksichtigt werden.

In den Unteransprüchen finden sich vorteilhafte Weiterbildungen und Verbesserungen des jeweiligen Gegenstandes der Erfindung.

Gemäß einer bevorzugten Weiterbildung wird beim Überschreiten eines vorbestimmten Abweichungsbetrages des berechneten den Reifendruck beschreibenden Parameters eine Warnung ausgegeben.

Gemäß einer weiteren bevorzugten Weiterbildung werden in dem Reifendruckmodell weitere erfaßte Parameter, insbesondere Beladungszustand und/oder Querbeschleunigungen und/oder Schlupf berücksichtigt.

Gemäß einer weiteren bevorzugten Weiterbildung wird als Parameter, welcher die Ortsveränderung des Kraftfahrzeuges beschreibt, eine Anzahl von Radumdrehungen erfaßt, welche auftritt, während das Kraftfahrzeug die mittels der GPS-Vorrichtung gemessene Ortsveränderung zurücklegt.

Gemäß einer weiteren bevorzugten Weiterbildung wird als Parameter, welcher die Ortsveränderungsgeschwindigkeit des Kraftfahrzeuges beschreibt, eine aktuelle Kraftfahrzeuggeschwindigkeit erfaßt, welche auftritt, während das Kraftfahrzeug die mittels der GPS-Vorrichtung gemessene Ortsveränderungsgeschwindigkeit aufweist.

Gemäß einer weiteren bevorzugten Weiterbildung wird der aktuelle Reifendruck mittels des vorgegebenen Reifendruckmodells berechnet.

Gemäß einer weiteren bevorzugten Weiterbildung wird unter Verwendung des erfassten Parameters eine Soll-Ortsveränderung und/oder Soll-Ortsveränderungsgeschwindigkeit des Kraftfahrzeuges mittels des vorgegebenen Reifendruckmodells berechnet, welche einem vorgegebenen Sollwert des Reifendrucks entspricht, und diese Soll-Ortsveränderung und/oder Soll-Ortsveränderungsgeschwindigkeit des Kraftfahrzeuges mit der gemessenen Ortsveränderung und/oder Ortsveränderungsgeschwindigkeit des Kraftfahrzeuges verglichen wird, um den den Reifendruck beschreibenden Parameter zu erhalten.

### ZEICHNUNGEN

Ein Ausführungsbeispiel der Erfindung ist in der Zeichnung dargestellt und wird in der folgenden Beschreibung näher erläutert.

Es zeigen:
- Figur 1: ein Fließdiagramm zur Erläuterung einer ersten Ausführungsform des erfindungsgemäßen Verfahrens; und
- Figur 2: ein Fließdiagramm zur Erläuterung einer zweiten Ausführungsform des erfindungsgemäßen Verfahrens; und
- Figur 3: ein Blockdiagramm zur Erläuterung der wesentlichen Komponenten eines Ausführungsbeispiels einer Vorrichtung zur Durchführung des erfindungsgemäßen Verfahrens.

### BESCHREIBUNG DER AUSFÜHRUNGSBEISPIELE

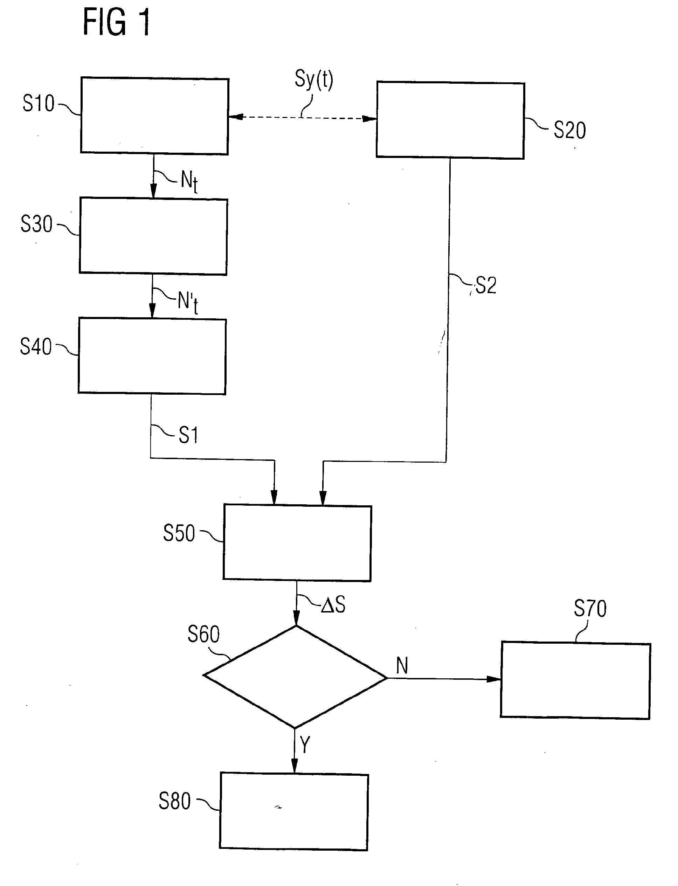

Figur 1 zeigt ein Fließdiagramm zur Erläuterung einer ersten Ausführungsform der Erfindung.

Gemäß dem ersten Ausführungsbeispiel, welches in Figur 1 gezeigt ist, wird in einem Schritt S10 eine Anzahl von Radumdrehungen Nₜ erfasst, welche von einem bestimmten Rad des Kraftfahrzeuges innerhalb einer Zeitspanne t ausgeführt wird.

Mittels einer Synchronisationseinrichtung SY synchronisiert dazu wird gleichzeitig in einem Schritt S20 mittels eines GPS-Systems (GPS = Global Positioning System) die während der Zeitspanne t zurückgelegte Wegstrecke s2 ermittelt.

Die erfasste Anzahl von Radumdrehungen Nₜ wird in einem Schritt S30 in einen Wert Nₜ' korrigiert. Bei der vorliegenden Ausführungsform beinhaltet diese Korrektur die Beseitigung des Einflusses von Querbeschleunigungen, welche mittels eines Querbeschleunigungssensors erfasst werden, sowie die Berücksichtigung eines Beladungszustandes des betreffenden Kraftfahrzeuges, welche mittels eines entsprechenden Beladungssensors erfasst wird.

Des weiteren beinhaltet die Korrektur eine Umrechnung auf eine schlupffreie Anzahl von Radumdrehungen, die einer Geradeausfahrt entspricht. Durch diese Korrektur wird also der Einfluß des Durchdrehend der Räder eliminiert. Zur Ermittlung der schlupffreien Anzahl von Radumdrehungen können die erfasste Straßensteigung, der erfasste Beladungszustand und ein erfasstes Motormoment herangezogen werden, wenn entsprechende Sensoren vorgesehen sind.

Aus allen diesen Korrekturen resultiert dann die korrigierte Anzahl von Radumdrehungen Nₜ'.

In einem Schritt S40 wird dann anhand eines Reifendruckmodels eine Wegstrecke s1 berechnet, welche zurückgelegt worden sein sollte, die Reifen einen Soll-Reifendruck P_{Soll} aufweisen würden. Dieser Wert wird dann im Schritt S50 verglichen mit dem durch die GPS-Einrichtung ermittelten Weg s2. Dieser Vergleich der Wegstrecken s1, s1 liefert im Schritt S50 eine Wegstreckendifferenz Δs gebildet.

In einem Entscheidungsschritt S60 wird geprüft, ob der Betrag der Wegstreckendifferenz Δs größer als eine vorbestimmter Schwellwert ist. Dieser Schwellwert ist unter Verwendung des Reifendruckmodels derart festgelegt worden, dass er einer bestimmten Druckabweichung, beispielsweise 0,2 bar, vom Soll-Reifendruck P_{Soll} entspricht. Ist die Abweichung nicht größer als der Schwellwert, so fährt das Verfahren fort mit Schritt S70, der die Überwachung abschließt bzw. einen neuen Überwachungszyklus einleitet. Ist das Testresultat in Schritt S60 positiv, das heißt ist der Betrag der Wegstreckendifferenz Δs größer als der Schwellwert, so ist dies ein Zeichen, dass eine nicht mehr tolerierbare Reifendruckabweichung von mehr als 0,2 bar vorliegt, und daher fährt das Verfahren fort zu Schritt S 80, in dem eine Warnung an den Fahrer ausgegeben wird.

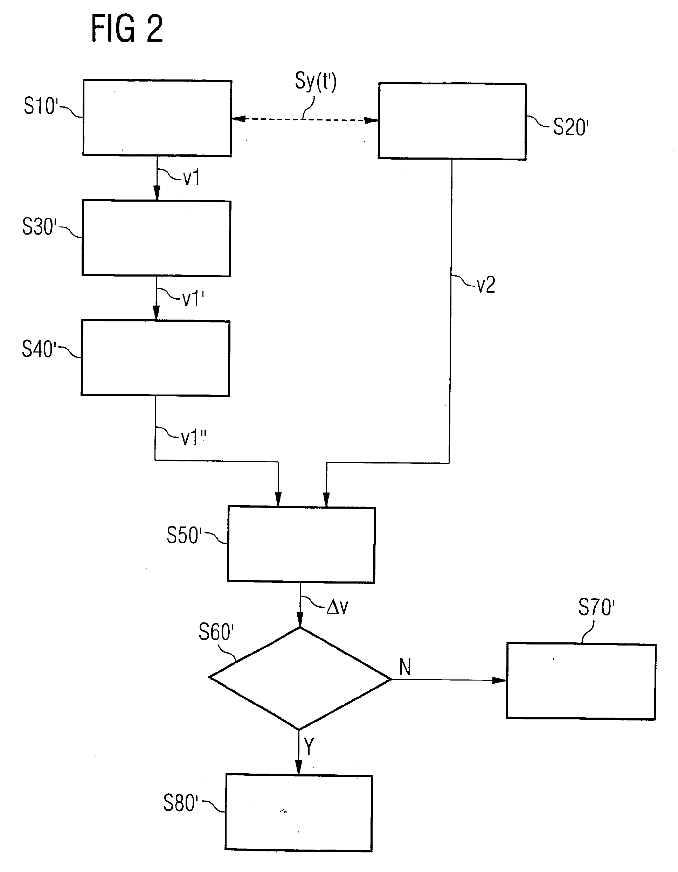

Figur 2 zeigt ein Fließdiagramm zur Erläuterung einer zweiten Ausführungsform der Erfindung.

Gemäß dem zweiten Ausführungsbeispiel, welches in Figur 2 gezeigt ist, wird in einem Schritt 310' eine Fahrzeuggeschwindigkeit v1 entweder direkt mittels des Tachometers oder indirekt aus der Radumdrehungsgeschwindigkeit dNₜ/dt erfaßt.

Mittels einer Synchronisationseinrichtung SY synchronisiert dazu wird gleichzeitig in einem Schritt S20' mittels eines GPS-Systems (GPS = Global Positioning System) die Fahrzeuggeschwindigkeit v2 ermittelt.

Die GPS-Einrichtung berechnet den dreidimensionalen Vektor der momentanen Kraftfahrzeuggeschwindigkeit mittels des Dopplereffekts mit einer Genauigkeit mit etwa von 0,2 m/s, was für eine Genauigkeit der Druckerfassung von 0,1 bar beispielsweise ausreicht.

Weiterhin kann auch die Umfeldsensorik von Fahrerassistentsystemen zur Ermittlung der Kraftfahrzeuggeschwindigkeit beitragen. Hierunter versteht man beispielsweise die Radar- und Lidaarsignale von derartigen Systemen.

Es ist weiterhin angedacht, in Zukunft eventuell die Kraftfahrzeuggeschwindigkeit direkt mittels einer eigenen Sensorik zu messen. Folgende weitere Technologien sollen hierzu noch genannt werden: Millimeterdopplerradar und optische Korrelationsverfahren.

Die erfasste Fahrzeuggeschwindigkeit v1 wird in einem Schritt S30' in einen Wert v1' korrigiert. Auch bei der zweiten Ausführungsform beinhaltet diese Korrektur die Beseitigung des Einflusses von Querbeschleunigungen, welche mittels eines Querbeschleunigungssensors erfasst werden, sowie die Berücksichtigung eines Beladungszustandes des betreffenden Kraftfahrzeuges, welche mittels eines entsprechenden Beladungssensors erfasst wird. Des weiteren beinhaltet die Korrektur eine Umrechnung auf eine schlupffreie Fahrzeuggeschwindigkeit, die einer Geradeausfahrt entspricht.

In einem Schritt S40' wird dann anhand eines Reifendruckmodels eine Fahrzeuggeschwindigkeit v1'' berechnet, welche vorliegen sollte, wenn die Reifen einen Soll-Reifendruck P_{Soll} aufweisen würden.

Dieser Wert wird dann im Schritt S50' verglichen mit der durch die GPS-Einrichtung ermittelten Fahrzeuggeschwindigkeit v2. Dieser Vergleich der Fahrzeuggeschwindigkeiten v1'', v2 liefert im Schritt S50' eine Geschwindigkeitsdifferenz Δv.

In einem Entscheidungsschritt S60' wird geprüft, ob der Betrag der Wegstreckendifferenz Δv größer als eine vorbestimmter Schwellwert ist. Dieser Schwellwert ist unter Verwendung des Reifendruckmodels derart festgelegt worden, dass er einer bestimmten Druckabweichung, beispielsweise 0,2 bar, vom Soll-Reifendruck P_{Soll} entspricht. Ist die Abweichung nicht größer als der Schwellwert, so fährt das Verfahren fort mit Schritt S70', der die Überwachung abschließt bzw. einen neuen Überwachungszyklus einleitet. Ist das Testresultat in Schritt S60' positiv, das heißt ist der Betrag der Geschwindigkeitsdifferenz Δv größer als der Schwellwert, so ist dies ein Zeichen, dass eine nicht mehr tolerierbare Reifendruckabweichung von mehr als 0,2 bar vorliegt, und daher fährt das Verfahren fort zu Schritt S80, in dem eine Warnung an den Fahrer ausgegeben wird.

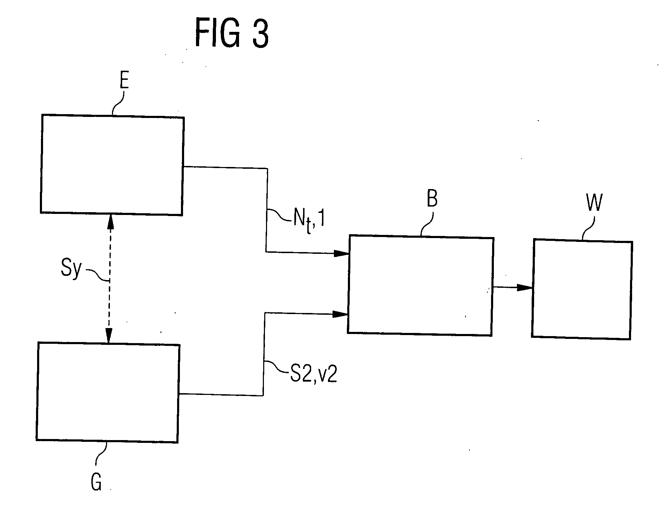

Die in Figur 3 gezeigte beispielhafte Anordnung zeigt eine Erfassungseinrichtung E, welche beispielsweise gemäß der ersten Ausführungsform die Anzahl von Radumdrehungen Nₜ oder gemäß der zweiten Ausführungsform die Geschwindigkeit v1 des Fahrzeuges ermittelt.

P ist eine übliche GPS-Einrichtung, welche über die Synchronisationseinrichtung SY mit der Erfassungseinrichtung E synchronisierbar ist. Die Ergebnisse der Einrichtungen E, G werden an eine Berechnungseinrichtung B weitergeleitet, beispielsweise an einen vorhandenen Bordcomputer, der die Berechnungen der Schritte S 50, S 60 bzw. S 50', S 60' vornimmt und gegebenenfalls eine Warnungsausgabe durch die Warneinrichtung W initiiert.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Erfindung nicht darauf beschränkt, daß zur Erfassung eines Reifenunterdrucks aus den erfaßten Größen die Weglängendifferenz oder die Geschwindigkeitsdifferenz errechnet wird, vielmehr kann der aktuelle Reifendruck auch direkt aus diesen Größen berchnet werden.

### Verfahren und Vorrichtung zur Reifendrucküberwachung in einem Kraftfahrzeug

### BEZUGSZEICHENLISTE

| | |
|---|---|
| S10-S80, S10'-S80' | Verfahrensschritte |
| Nₜ, Nₜ' | Anzahl Radumdrehungen |
| v1,v1',v1'',v2 | Geschwindigkeiten |
| Δs, Δv | Weglängen-, Geschwindigkeitsdifferenz |
| E | Erfassungseinrichtung |
| G | GPS-System |
| B | Berechnungseinrichtung |
| W | Warneinrichtung |

## Patentansprüche

1. Verfahren zur Reifendrucküberwachung in einem Kraftfahrzeug mit den Schritten:
Messen einer Ortsveränderung und/oder Ortsveränderungsgeschwindigkeit des Kraftfahrzeuges mittels einer GPS-Vorrichtung (G);
Erfassen mindestens eines Parameters (Nₜ, v(t)), welcher die Ortsveränderung und/oder Ortsveränderungsgeschwindigkeit des Kraftfahrzeuges beschreibt, mittels einer im Kraftfahrzeug vorgesehen Erfassungseinrichtung (E); und
Berechnen eines den Reifendruck beschreibenden Parameters unter Verwendung des erfassten Parameters (Nₜ, v(t)) und der gemessenen Ortsveränderung und/oder Ortsveränderungsgeschwindigkeit mittels eines vorgegebenen Reifendruckmodells.

2. Verfahren nach Anspruch 1, **dadurch gekennzeichnet, daß** beim Überschreiten eines vorbestimmten Abweichungsbetrages des berechneten den Reifendruck beschreibenden Parameters eine Warnung ausgegeben wird.

3. Verfahren nach Anspruch 1 oder 2, **dadurch gekennzeichnet, daß** in dem Reifendruckmodell weitere erfaßte Parameter, insbesondere Beladungszustand und/oder Querbeschleunigungen und/oder Schlupf berücksichtigt werden.

4. Verfahren nach Anspruch 1, 2 oder 3, **dadurch gekennzeichnet, daß** als Parameter (Nₜ), welcher die Ortsveränderung des Kraftfahrzeuges beschreibt, eine Anzahl von Radumdrehungen erfaßt wird, welche auftritt, während das Kraftfahrzeug die mittels der GPS-Vorrichtung gemessene Ortsveränderung zurücklegt.

5. Verfahren nach einem der Ansprüche 1 bis 4, **dadurch gekennzeichnet, daß** als Parameter (v(t)), welcher die Ortsveränderungsgeschwindigkeit des Kraftfahrzeuges beschreibt, eine aktuelle Kraftfahrzeuggeschwindigkeit erfaßt wird, welche auftritt, während das Kraftfahrzeug die mittels der GPS-Vorrichtung gemessene Ortsveränderungsgeschwindigkeit aufweist.

6. Verfahren nach einem der vorhergehenden Ansprüche, **dadurch gekennzeichnet, daß** der aktuelle Reifendruck mittels des vorgegebenen Reifendruckmodells berechnet wird.

7. Verfahren nach einem der vorhergehenden Ansprüche, **dadurch gekennzeichnet, daß** unter Verwendung des erfassten Parameters (Nₜ, v(t)) eine Soll-Ortsveränderung und/oder Soll-Ortsveränderungsgeschwindigkeit des Kraftfahrzeuges mittels des vorgegebenen Reifendruckmodells berechnet wird, welche einem vorgegebenen Sollwert des Reifendrucks entspricht, und diese Soll-Ortsveränderung und/oder Soll-Ortsveränderungsgeschwindigkeit des Kraftfahrzeuges mit der gemessenen Ortsveränderung und/oder Ortsveränderungsgeschwindigkeit des Kraftfahrzeuges verglichen wird, um den den Reifendruck beschreibenden Parameter zu erhalten.

8. Vorrichtung zur Durchführung des Verfahrens nach mindestens einem der vorherigen Absprüche, **gekennzeichnet durch**:
eine GPS-Vorrichtung (G) ;
eine Erfassungseinrichtung (E) zum Erfassen des mindestens eines Parameters (Nₜ, v(t)), welcher die Ortsveränderung und/oder Ortsveränderungsgeschwindigkeit des Kraftfahrzeuges beschreibt; und
eine Berechnungseinrichtung (B) zum Berechnen des den Reifendruck beschreibenden Parameters unter Verwendung des erfassten Parameters (Nₜ, v(t)) und der gemessenen Ortsveränderung mittels eines vorgegebenen Reifendruckmodells.

9. Vorrichtung nach Anspruch 8, **dadurch gekennzeichnet, daß** eine Warnungseinrichtung (W) vorgesehen ist, die bei Überschreiten des vorbestimmten Abweichungsbetrages des berechneten den Reifendruck beschreibenden Parameters eine Warnung ausgibt.

10. Vorrichtung nach Anspruch 8 oder 9, **dadurch gekennzeichnet, daß** die Erfassungseinrichtung (E) eine Einrichtung zur Erfassung einer Anzahl von Radumdrehungen und/oder eine Einrichtung zur Erfassung einer aktuellen Kraftfahrzeuggeschwindigkeit aufweist.
